Europäisches Patentamt

European Patent Office

Office européen des brevets

(19)

(11) Publication number: **0 062 403**
**B1**

(12) EUROPEAN PATENT SPECIFICATION

(45) Date of publication of patent specification: **13.11.85**

(51) Int. Cl.⁴: **F 16 D 55/224**

(21) Application number: **82300800.8**

(22) Date of filing: **17.02.82**

(54) Disc brake caliper.

(30) Priority: **08.04.81 GB 8111076**

(43) Date of publication of application:
**13.10.82 Bulletin 82/41**

(45) Publication of the grant of the patent:
**13.11.85 Bulletin 85/46**

(84) Designated Contracting States:
**BE DE FR GB IT SE**

(56) References cited:
**DE-A-1 948 866**
**FR-A-1 383 346**
**FR-A-1 390 223**
**FR-A-2 021 561**
**FR-A-2 142 248**
**FR-A-2 221 028**
**FR-A-2 321 072**
**FR-A-2 346 606**
**FR-A-2 371 605**
**GB-A-1 524 007**
**GB-A-2 018 372**

(73) Proprietor: **AUTOMOTIVE PRODUCTS PUBLIC
LIMITED COMPANY
Tachbrook Road
Leamington Spa Warwickshire CV31 3ER (GB)**

(72) Inventor: **Haines, Ernest William
39 St. Marys Close
Southam Warwickshire (GB)**

(74) Representative: **Farrow, Robert Michael
Patent Department Automotive Products plc
Tachbrook Road
Leamington Spa Warwickshire CV31 3ER (GB)**

Courier Press, Leamington Spa, England.

## Description

This invention relates to disc brake calipers particularly though not exclusively for use in wheel brakes for motor vehicles.

One kind of disc brake caliper, hereinafter referred to as a floating caliper, includes a frame fixed relative to a vehicle body and in which a hydraulic cylinder is free to slide to urge brake pads against opposite faces of a brake disc, one pad being applied directly by the cylinder piston and the other by a yoke attached to the cylinder body and extending around the disc. Such calipers are economical to produce since they have only one hydraulic cylinder, furthermore they take up less space and can be lighter than conventional opposed piston calipers.

The present invention is concerned with so called "fist type" floating calipers where the cylinder body is mounted on the frame by two cylindrical slide pins, a disc bridging member being attached to the body and extending over the periphery of the disc to support the outboard brake pad.

It is known for example from FR—A—1,383,346 a caliper according to the preamble of claim 1, having separate hydraulic cylinder and bridging member held together by high tensile bolts. This has the advantage that the cylinder can be cast in an aluminium alloy to save weight whilst the bridging member is formed from iron or steel for strength. However, separate clamping bolts and slide pins can lead to flexing of the caliper which leads to sticking of the slide pins in their slide ways.

One problem with fist type floating calipers is that the slide pins must be a close fit in the corresponding bores of the cylinder body to provide smooth operation and prevent rattle. It is both difficult and expensive to provide tooling which can hold and accurately bore the caliper to the required positional and dimensional tolerances.

The present invention seeks to provide an improved caliper assembly which overcomes the aforementioned disadvantages whilst retaining the advantages inherent in the floating caliper design.

According to the invention there is provided a disc brake caliper including a hydraulic cylinder assembly slidably mounted on a frame by two parallel guide pins fixed to the frame and slidable in slideways of the cylinder assembly, said cylinder assembly comprising a hydraulic cylinder having a piston for urging a first brake pad away from the cylinder and a disc bridging member fastened to said cylinder by two fastening bolts to move therewith a second brake pad, towards said first pad, characterised thereby that said fastening bolts are two hollow bolts each having a bore with an elastomeric or plastic inner sleeve and consitituting the slideways for the guide pins of the cylinder assembly.

Thus both the clamping bolts and slide pins may be in an ideal position relative to the centre of applied load, i.e. on the piston centreline, and sticking of the slide pins in their slideways is obviated.

Other features of the invention are included in the following description of a preferred embodiment of the invention shown, by way of example only, in the accompanying drawings in which:—

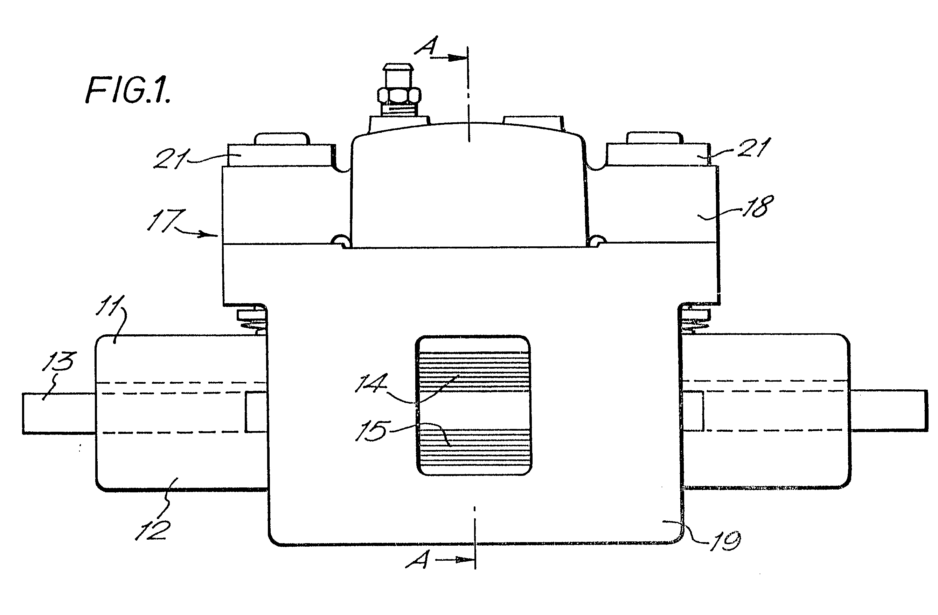

Fig. 1 is a plan view of a "fist type" floating caliper;

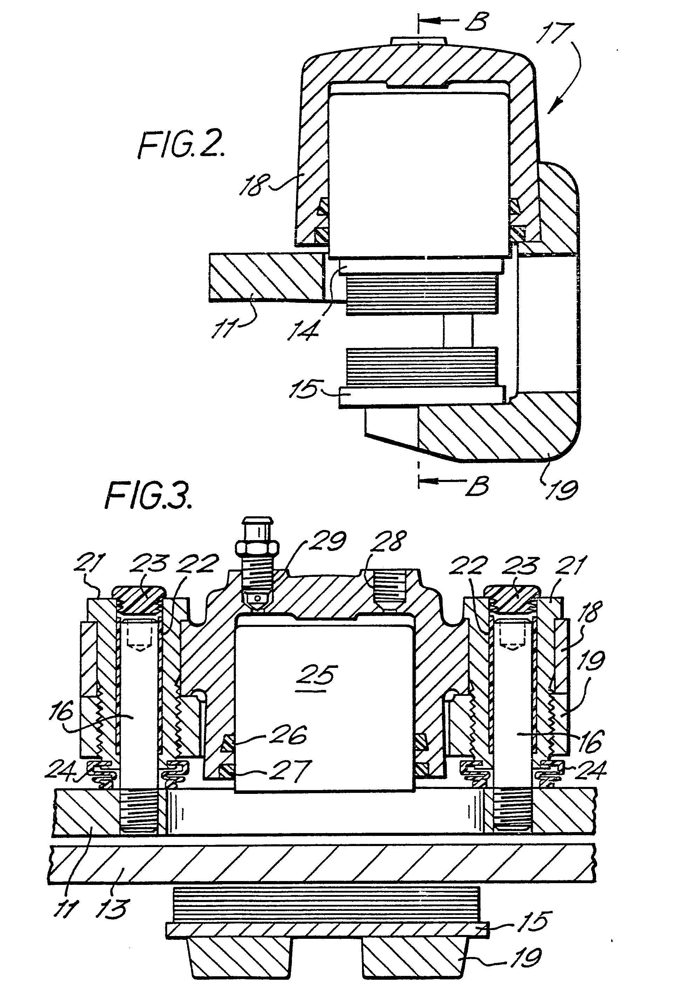

Fig. 2 is a transverse section through the caliper on line A—A of Fig. 1; and

Fig. 3 is a tranverse section through the caliper on line B—B of Fig. 2, and omitting the inboard brake pad for clarity.

The invention will be described as applied to a caliper for a motor vehicle braking system.

With reference to the drawings there is shown a substantially 'u' shaped frame member 11 for attachment to a vehicle hub (not shown). The upstanding arms of the member 11 have flanges 12 which straddle a brake disc 13 to support a pair of brake disc friction pads 14 and 15.

Two cylindrical guide pins 16 having socket heads are screwed into the member 11 for cooperation with a hydraulic cylinder assembly 17.

The cylinder assembly 17 comprises a hydraulic cylinder body 18 and bridge member 19 fastened together by two shouldered hollow bolts 21. The bolts 21 are screw-threaded into the bridge member 19, the unthreaded bolt shank constituting a shoulder and being a tight fit in the cylinder body 18 to positively locate the body relative to the bridge member 19.

Each hollow bolt 21 is counterbored from the headed end for part of its length to receive an elastomeric sleeve 22. The sleeve is preferably made from a rubber material but the type of material employed will be dictated by the duty of the caliper and the machining tolerances of the cylinder assembly. Each sleeve 22 forms a bearing member for cooperation with a respective guide pin 16 and allows the cylinder assembly 17 to slide relative to the frame member 11. The open end of each bolt 21 is closed by a plastic plug 23.

A gaiter 24 is provided for the exposed portion of each guide pin 16, and is conveniently located in a groove formed on an unthreaded extension of the respective bolt 21. Convolutions of the gaiter resiliently urge its free end towards the frame member 11 where it may be retained in a housing.

The cylinder is provided with the usual piston 25, pressure seal 26 and wiper seal 27 and has a fluid pressure supply 28 and bleed port 29.

The use of the hollow bolts 21 to fasten the cylinder body 18 and bridge member 19 whilst providing the slide bores for cooperation with the respective guide pins 16 eliminates the need for additional bolts to hold the cylinder assembly together. The cooperating bore of the cylinder body 18 and threaded bore of the bridge member 19 need not be precision machinings since the elastomeric sleeve 22 will take-up any small misalignment between the parts.

The sleeve need not be a single plain cylindrical insert but may be several smaller inserts or be a plastic insert ribbed to give resilience.

The brake pads 14 and 15 may be changed by removing one of the guide pins 16 and pivoting the cylinder assembly about the remaining guide pin.

It will be noted that the caliper is unhanded and that the present construction provides a single caliper which is suitable for both sides of vehicle without modification.

### Claims

1. A disc brake caliper including a hydraulic cylinder assembly (17) slidably mounted on a frame (11) by two parallel guide pins (16) fixed to the frame (11) and slidable in slideways of the cylinder assembly (17), said cylinder assembly (17) comprising a hydraulic cylinder (18) having a piston (25) for urging a first brake pad (14) away from the cylinder and a disc bridging member (19 fastened to said cylinder by fastening bolts (21) to move therewith a second brake pad (15) towards said first pad (14), characterised thereby that said fastening bolts are two hollow bolts (21) each having a bore with an elastomeric or plastic inner sleeve (22) and constituting the slideways for the guide pins (16) of the cylinder assembly (17).

2. A caliper according to Claim 1, characterised thereby that each of said inner sleeves (22) comprises a single cylindrical bush.

3. A caliper according to Claim 1 or Claim 2, characterised thereby that each of said hollow bolts (21) is screw-threaded in the bridging member (19) and has a shoulder for positive location in a respective bore of the cylinder (18).

4. A caliper according to Claim 2, characterised thereby that at least one of the hollow bolts (21) extends from the bridging member (19) to locate a gaiter (24) for the respective guide pin (16).

5. A caliper according to Claim 4, characterised thereby that said gaiter (24) is retained in an annular groove formed on an unthreaded extension of said hollow bolt (21).

### Patentansprüche

1. Scheibenbremsensattel mit einer Hydraulikzylinderanordnung (17), die an einem Rahmen (11) durch zwei parallele Führungsstifte (16) gleitbar angebracht ist, die an dem Rahmen (11) befgestigt und in Gleitbahnen der Zylinderanordnung (17) gleitbar sind, wobei die Zylinderanordnung (17) einen Hydraulikzylinder (18) mit einem Kolben (25), um einen ersten Bremsklotz (14) von dem Zylinder wegzudrängen, und ein Scheibenüberbrückungsteil (19) aufweist, das an dem Zylinder durch Befestigungsbolzen (21) befestigt ist, um einen zweiten Bremsklotz (15) gegen den ersten Klotz (14) zu bewegen, dadurch gekennzeichnet, daß die Befestigungsbolzen zwei hohle Bolzen (21) sind, von denen jeder eine Bohrung mit einer elastischen oder plastischen inneren Hülse (22) hat und die Gleitbahnen für die Führungsstifte (16) der Zylinderanordung (17) bildet.

2. Sattel nach Anspruch 1, dadurch gekennzeichnet, daß jede der inneren Hülsen (22) eine einzelne zylindrische Büchse aufweist.

3. Sattel nach Anspruch 1 oder Anspruch 2, dadurch gekennzeichnet, daß jeder der hohlen Bolzen (21) in das Überbrückungsteil (19) eingeschraubt ist und eine Schulter zur starren Fixierung in einer jeweiligen Bohrung des Zylinders (18) hat.

4. Sattel nach Anspruch 2, dadurch gekennzeichnet, daß wenigstens einer der hohlen Bolzen (21) aus dem Überbrückungsteil (19) vorsteht, um eine Gamasche (24) für den jeweiligen Führungsstift (16) zu fixieren.

5. Sattel nach Anspruch 4, dadurch gekennzeichnet, daß die Gamasche (24) in einer ringförmigen Nut gehalten wird, die an einer gewindefreien Verlängerung des hohlen Bolzens (21) gebildet ist.

### Revendications

1. Etrier pour frein à disque comprenant un ensemble formant cylindre récepteur hydraulique (17) qui est monté coulissant sur un bâti (11) à l'aide de deux tiges de guidage parallèles (16) qui sont fixées sur le bâti (11) et peuvent coulisser dans des glissières de l'ensemble-cylindre (17), ledit ensemble-cylindre (17) comprenant un cylindre récepteur hydraulique (18) qui présente un piston (25) destiné à repousser un premier segment de frein (14) à l'écart par rapport au cylindre et une pièce d'enjambement de disque (19) qui est fixée sur ledit cylindre par des boulons de fixation (21) de manière à déplacer avec elle un second segment de frein (15) en direction dudit premier segment (14), caractérisé par le fait que lesdits boulons de fixation sont deux boulons creux (21) dont chacum présente un alésage muni d'un fourreau intérieur en élastomère ou matière plastique (22) et qui constituent les glissières pour les tiges de guidage (16) de l'ensemble-cylindre (17).

2. Etrier selon la revendication 1, caractérisé en ce que chacun des fourreaux intérieurs (22) comprend un manchon cylindre unique.

3. Etrier selon la revendication 1 ou la revendication 2, caractérisé en ce que chacun desdits boulons creux (21) est vissé dan la pièce d'enjambement (19) et présente un épaulement en vue d'un positionnement actif dans un alésage associé du cylindre (18).

4. Etrier selon la revendication 2, caractérisé en ce qu'au moins l'un des boulons creux (21) se prolonge à partir de la pièce d'enjambement (19) de manière à fixer une gaine souple (24) destinée à la tige de guidage associée (16).

5. Etrier selon la revendication 4, caractérisé en ce que ladite gaine souple (24) est retenue dans une gorge annulaire qui est ménagée sur un prolongement non fileté dudit boulon creux (21).

FIG.1.

21

17

11

13

14

15

21

18

0 062 403

12

19

A

A

FIG.2.

FIG.3.